# EUROPEAN PATENT APPLICATION

(11) **EP 2 279 666 A2**
(43) Date of publication of application: **02.02.2011**
(21) Application number: 10192250.8
(22) Date of filing: 15.02.2006
(51) Int. Cl.: A23C 19/05, A23C 19/032, A23C 19/04, A23C 21/02, A23C 21/08, C12N 11/02

(54) **Transfer of active compounds to curd during cheese making**

(30) Priority: 16.02.2005 EP 05101146
(62) Divisional of application: 06708296.6
(71) Applicant: DSM IP Assets B.V., 6411 TE Heerlen (NL)
(72) Inventor: Dijk, Van, Albertus, Alard, 2600 MA, Delft (NL); Guillonard, Lambertus Jacobus Otto, 2496 VN, Den Haag (NL); Roos, De, Andre Leonardus, 2614 TB Delft, (NL)
(74) Representative: van Grieken-Plooster, Izabella Johanna

(57) **Abstract**

The present invention relates to a composition comprising a whey protein and an active compound, wherein the composition releases at most 30 wt% of the active compound when hydrated in Jennes-Koops buffer at room temperature during a period of 30 minutes. The invention also relates to a production method for the composition. During the cheese making process this composition can be added to milk. The enzymes are then mainly released from the particle after the separation of curd from the whey has taken place.

## Description

The present invention relates to a novel composition comprising whey protein and an active compound, a method for the preparation thereof, and the use of the composition in cheese making.

Traditional cheese manufacturing processes involve coagulating milk to form solid curds and liquid whey. Coagulation is an essential step in the traditional production of cheese from a dairy composition such as bovine milk.

The coagulation may be started by acidification and/or the addition of an enzyme (coagulant) such as chymosine. After coagulation, the milk is separated into curd and whey. The curd is processed further into cheese. Caseins form the main protein component of the curd. Cheese manufacturing processes from various milk sources have long been known and have been described in detail for many different types of cheese variants. (see *e.g*. Cheese: Chemistry, Physics and Microbiology, Vol 1&2, 1999, Ed. Fox, Aspen Publications, Gaithersburg, Maryland; Encyclopedia of Dairy Sciences Vol 1-4, 2003, Academic Press, London). A crucial point in cheese manufacture is the process of coagulation, in which the solubility of the casein micelles and submicelles is decreased. Enzyme induced coagulation is very commonly used. Enzymes like calf chymosine, microbial equivalents of chymosine and other enzymes from other sources have been described and several are available under various trade names. All of them can be used to initiate the coagulation process. The primary step in coagulation is the cleavage of the Phe₁₀₅-Met₁₀₆ bond in κ-casein. This leads to removal of the C-terminal part of κ-casein: the glycomacropeptide (GMP). Removal of the GMP leads to association of the casein micelles, i.e casein coagulation. Casein coagulation leads to gel formation, and the time required to obtain gelling in a particular dairy composition is directly related to the activity of the coagulant. Usually between 30 to 60 minutes of the start of the coagulation of the cheese milk, the curd particles are separated from the whey. The curd contains approximately 80% of the protein from the milk (caseins) and the whey the rest (whey protein). The curd is then salted and pressed to produce fresh cheese. Salting and pressing procedures differ for the various cheese types and relevant methods are known to the person skilled in the art.

The fresh cheese is then aged (ripened) under the particular temperature conditions necessary to allow the desired taste and texture to develop. Cheese ripening is a time-consuming process involving complex and well-balanced reactions between glycolysis, proteolysis and lipolysis of the milk components. In most cheeses, bacterial enzymes play a major role in this process. It is well known that changing the bacterial enzyme content is cheese directly affects the rate of cheese ripening and its final flavour (Klein & Lortal, Int. Dairy Journal (1999) 9, 751-762.).

If the ageing or ripening period is short, the product is known as young cheese. Longer ageing periods produce mild, mature and extra mature cheese. As the cheese is aged for longer periods of time,more flavour develops, increasing the value of the resultant cheese. While "old" and "very old" cheeses command higher prices in the marketplace than younger cheeses, they are also expensive to produce because of the substantial costs associated with storage and refrigeration during the lengthy ripening process. Cheeses need to be stored during ripening under precisely defined conditions for temperature (generally about 10 °C) and humidity for weeks to months. The ripening time varies considerably between the various cheeses, from 3 weeks (*e.g*. Mozzarella) to more than 2 years (*e.g*. Parmesan, extra mature cheddar).

If ripening could be accelerated this would result in a reduction in the considerable costs associated with storing the cheese during the ripening process.

A way to influence cheese ripening is to increase the bacterial enzyme pool in cheese curd by the addition of whole lactic acid bacteria, unable to grow and produce significant levels of lactic acid, but still delivering active ripening enzymes during cheese ageing. The starters are normally weakened and referred to as attenuated.

Alternatively, exogenous enzymes could be used to accelerate cheese ripening, and several products have appeared on the market. Enzymes are preferably added to the cheese milk since this ensures a homogeneous distribution of the enzyme in the milk and also in the cheese afterwards. The addition to the cheese milk has several problems. One problem is that most of the used, usually well water-soluble, enzymes added to the cheese milk ends up in the whey fraction and not in the cheese; often 90% or more of the enzyme. This makes the use of enzyme inefficient and costly since it requires a high dosage. At the same time, the whey is contaminated with the added enzyme which may limit the use of the whey in other food stuffs. Another problem is that the added enzyme could interfere with the cheese coagulation process. For example, endo-proteases are potentially interesting enzymes to accelerate cheese ripening, but when they are added to the cheese milk they will interfere with the action of the coagulant leading to reduced cheese yields or alteration of cheese curd properties.

In some cases, the enzymes are added after the curd is formed. During the preparation of Cheddar, for example, the enzymes can be added to the curd as liquid (spraying) or powder prior to, during or shortly after salting. This has, however, the disadvantage that the enzyme may not be homogeneously distributed in the cheese leading to so called hot spots where the high local enzyme activity may lead to flavour or texture defects.

In general the curd is separated from the whey fraction in about 30-50 minutes after the addition of the coagulant to the milk. There is a need for a means to retain enzymes within curd fractions during the production of the cheese.

U.S. Patent No. 4,927,644 describes a method for the entrapment of enzymes in cheese curd by producing enzyme aggregates without complexing or immobilising agents. The enzyme particles are insoluble in milk and when the curd is separated from the whey, the enzyme aggregates remain in the curd. However, as the enzyme aggregates consist essentially of insoluble enzyme after the separation of the curd and whey these enzymes are, at best, partly available for the cheese making process.

WO02/23998 describes a hydrocolloid matrix in which an enzyme is entrapped. The matrix can be made of cheese-own proteins, as caseins and whey. We found that the use of whey protein has a number of advantages compared to the use of caseins. For instance, why protein dissolves more easily at lower temperatures. This is in particular advantages if the active compound to be embedded is heat sensitive. Moreover, the hydrophilic nature of whey protein is found to facilitate incorporation of hydrophilic enzymes. In addition, whey protein solutions used to prepare particles can have a lower viscosity, which makes handling easier.

There is still a desire to improve the whey matrix disclosed in WO02/23998 as regards the release rate of the enzyme. The whey matrix lost 47.5% of the activity of the enzyme in 40 minutes. By decreasing the release rate, the loss of useful enzyme via the whey fraction and potential problems of enzyme in the whey fraction can be further reduced.

The object of the invention is to provide a method to produce a composition based on whey proteins suitable for slow release of the entrapped enzymes. The present invention solves the above problem.

It is now found that the release rate of the active compound from a composition comprising whey protein can be significantly decreased by influencing the gelation conditions.

Accordingly, according to a first aspect, the invention provides a composition comprising a whey protein and an active compound, wherein the composition releases at most 30 wt% of the active compound when hydrated in Jennes-Koops buffer at room temperature during a period of 30 minutes. As used herein, room temperature refers to a temperature of 20 °C.

According to a second aspect, the invention provides a method for preparing a composition comprising an active compound and whey protein, said method comprising gelling of the whey protein in the presence of an active compound under conditions such as to obtain a composition which releases at most 30 wt% of the active compound when hydrated in Jennes-Koops buffer at room temperature during a period of 30 minutes.

The composition according to the invention permits release of the active compound at a reduced rate, and in particular the slow release of the active compounds after the separation of the curd and whey. Additionally, the active compound can be homogeneously distributed throughout the curd.

The Jennes-Koops buffer is well known in the art, and is for instance described in Jennes R, Koops J.. (1962) Neth Milk Dairy J. 16,153-164. For the determination of the release rate, preferably 0.50 gram of the composition is suspended in 50 ml Jennes-Koops buffer. This is further exemplified in example 2.

The composition according to the invention comprises whey protein. Any suitable whey protein may be used. Whey protein is a hydrocolloid, and food grade hydrocolloids are preferably used. The whey protein may be obtained from any suitable source such as for instance milk, cream and cheese whey. Whey derived from any cheese may be used, including cheddar cheese, Swiss cheese, mozzarella cheese and the like. The whey protein may be obtained by any method known in the art. Whey protein preparations are commercially available in several forms such as whey protein concentrates (WPC) and whey protein isolates (WPI).

Whey proteins are preferably obtained by using one or more process steps, including but not limited to ultrafiltration, electrodialysis, evaporation and reverse osmosis of cheese whey. Whey protein preparations are commercially available as whey protein concentrates (WPC) or whey protein isolates from producers like Davisco (USA, MN), Bio-isolates PLC (UK), NZMP North America (USA, CA), Arla Foods (Denmark) or DMV International (Netherlands).

Examples of suitable whey proteins are beta-lactoglobulin and alpha-lactalbumin.

Processed whey proteins can also be used, for example the whey protein derived preparations as marketed by *e.g*. Borculo Domo whey products (e.g. Hiprotal) or Grande (e.g. Grande Bravo).

Also one or more of the above mentioned whey proteins may be used in combination with each other. Also other hydrocolloids may be used in combination with the whey protein, in order to obtain a desired property of the composition. Suitable other hydrocolloids can be proteins, polysaccharides or mixtures thereof. Examples of suitable hydrocolloids are cellulose derivatives, gelatine, casein, soybean protein, pectin, gellan gum, albumin, carrageenan, alginate, agar and starch derivatives. Products derived from these hydrocolloids can also be used, such as for example sodium caseinate.

Whey proteins are easy to handle, are abundantly available and have the ability to quickly form networks stabilized by covalent bonds (disulfides) that entrap the enzyme. The whey proteins are well soluble in aqueous solutions and well miscible with other components such as enzymes. This facilitates the incorporation of such component in the whey networks. Furthermore, whey proteins generally do not lead to enzyme inactivation *e.g*. by hydrophobic interactions.

As active compounds are preferably used functional compounds which may be incorporated into the final cheese product by use of the composition according to the invention. Because the composition is in general intended for use in cheese making, the active compounds will advantageously have an effect in the cheese or the cheese making process and are in general food grade compounds. In addition, the active compounds may provide the cheese with an extra quality, e.g. a health advantage by the incorporation of functional compounds which have a demonstrated health benefit (for example galacto-oligosaccharides).

Preferably, the active compound will have a function during the ripening or storing process of the cheese. These compounds may influence for example the structure, flavour, storability, and ageing process of the cheese.

Preferably, the active compounds are partly soluble or soluble in water. More preferably, the active compound is soluble in water. Examples of active compounds which may be used include proteins (such as enzymes) and carbohydrates. Examples of suitable carbohydrates are galacto-oligosaccharides, fructo-oligosaccharides or glucose-oligosaccharides. Preferably the active compound is an enzyme. Examples of enzymes, which can be used according to the invention, are proteases (e.g. endo- or exo-), aminopeptidases, carboxypeptidases, amino transferases, lyases, beta-galactosidases, lipases and combinations thereof. Preferably, soluble enzymes are used.

It is found that the rate at which the active compound is released from a composition comprising whey protein can be significantly decreased by influencing the gelation conditions.

The disclosure given below, and provided by the invention provides a broad insight in how to influence the process, and in particular the gelling conditions, such as to decrease the rate at which the active compound is released.

Advantageously, the gelling of the whey protein is effected at a pH between 5 and 9, for instance between 5 and 8, more preferably between 6 and 8, more preferably between 6.5 and 7.5. Most preferably the pH is adjusted such that a clear firm gel is obtained during the gelling process. Using a pH within the preferred ranges is found to have a beneficial effect on the release properties.

Accordingly, according to a third aspect, the invention provides a method for preparing a composition comprising an active compound and whey protein, said method comprising gelling of the whey protein in the presence of an active compound at a pH between 5 and 9, for instance between 5 and 8, more preferably between 6 and 8, more preferably between 6.5 and 7.5.

Advantageously, the gelling is effected in the presence of metal ions. Preferably, the metal ions are monovalent metal ions, preferably sodium ions or potassium ions. It is found that the use of monovalent metal ions has a beneficial effect on the release properties. Therefore, the composition according to invention preferably comprises monovalent metal ions. Preferably, the composition comprises between 0.1 and 2.5 mol, more preferably between 0.2 and 1.5 mol, more preferably between 0.5 and 1 mol of monovalent metal ions per kg of dry matter in the composition. Preferably, the the composition comprises sodium ions or potassium ions in a concentration within these preferred ranges.

The invention further provides, in a fourth aspect, a method for preparing a composition comprising an active compound and whey protein, said method comprising gelling of the whey protein in the presence of monovalent metal ions.

The invention further provides, in a fifth aspect, a composition comprising a whey protein, an active compound and monovalent metal ions.

The active compound can be distributed heterogeneously or homogeneously throughout the composition. Preferably the active compound, such as an enzyme is homogeneously distributed throughout the composition.

In a preferred embodiment, the process comprises preparing a solution comprising the whey protein and the active compound, and gelling of the whey protein from said solution. Preferably, the solution comprises between 8 to 12 wt.% of whey protein, more preferably between 9.5 and 11 wt%, and most preferably about 10 wt%.

Preferably, the solution comprises metal ions, preferably monovalent metal ions, in a concentration between 10 and 250 mM, more preferably between 20 and 150 mM, more preferably between 50 and 100 mM. Preferably, the solution contains sodium or potassium ions in the concentrations ranges mentioned.

Preferably, the solution the solution has a pH between 5 and 9, for instance between 5 and 8, more preferably between 6 and 8, more preferably between 6.5 and 7.5. Preferably, the metal ions mentioned are added to the solution having the preferred values of the pH values.

Preferably, the solution is an aqueous solution.

Denaturation of the whey protein prior to gelling may be effected in any suitable manner. In a preferred embodiment, the method according to the invention comprises dissolving whey protein, treating the dissolved whey protein such as to effect denaturation of whey protein, and adding the active compound to the treated whey protein. This is an effective way to obtain the solution comprising whey protein and active compound, and has the advantage that heat sensitive active compounds are not subjected to the conditions of the treatment. Preferably, said treating is by heating, preferably at a temperature of at least 80 °C. In a preferred embodiment, the method comprises cooling the treated whey protein prior to adding the active compound.

In a preferred embodiment, a method is provided comprising (a) dissolving whey protein at neutral pH, (b) heating the whey protein to at least 80 °C, (c) cooling the whey protein, (d) adding the active compound in an amount from 0.01 to 20 wt% (based on dry matter of the whey protein) at a temperature which does not inactivate the active compound; and (e) initiate gelation of the whey protein. A neutral pH is here and hereafter defined as a pH between 5 up to and including 8, preferably between 6.5 up to and including 7.5.

Preferably, the gelling comprises subjecting the solution to a temperature between 0 and 20°C, preferably between 2 and 10°C, for instance between 2 and 6°C. Preferably, said subjecting is for a period of at least 2 hours, preferably between 2 and 40 hours, more preferably between 4 and 20 hours. This is found to have a beneficial effect on the release properties.

The method according to the invention may include cutting, drying and/or size reducing of the gel formed by the gelling of the whey protein, such as to prepare particles. This may result in dried whey protein particles of defined size containing the entrapped active compound. The gel obtained by the gelling of the whey protein may, optionally after cutting, be dried in any suitable manner, for example on air, in vacuum or in a fluidised bed. After the drying, the composition may be milled, according to procedures known in the art, for example with a grinder or a centrifugal cutting mill. In another embodiment, the method according to the invention may comprise spray drying of the solution comprising the whey protein and active compound. Gellation may then be effected during spray drying. This is an alternative way to obtain particles. Spray drying may be effected (immediately) after addition of the ions. Optionally, the addition of ions prior to spray drying can be omitted.

The obtained dry powder can be stored at room temperature

Several mechanisms are available to control the release of the active compound from the composition at a selected or preferred time. The release of the active compound can furthermore be actively influenced by adding compounds such as fats or waxes or by selecting the composition/enzyme ratio. In general, the more wax or fat that is used, the slower the swelling process. However, the degree of enzyme-release can be inhibited as well. Based on this teaching, the person skilled in the art can determine the preferred amount of wax or fat, depending on the desired release rate and desired degree of enzyme release. Increase of the whey protein/enzyme ratio will generally decrease the release rate of the active compound. In a preferred embodiment, the composition comprises the active compound in an amount from 0.01 to 20 wt% (based on dry matter of the composition).

Without wishing to be bound by any scientific theory, forming of the composition from whey protein is believed to works as follows. Heat denaturation will unfold the globular whey proteins into more or less random coils of peptide chains that on cooling will form aggregates via various types of interactions. These interactions may be of electrostatic, hydrophobic or covalent nature. The coss-linking interactions will entrap water molecules and a gel will be formed. A protein gel may be defined as a three-dimensional matrix or network in which polymer-polymer interactions occur in an ordered manner resulting in the immobilization of large amounts of water by a small proportion of the protein.

Functionalities of the gel such as viscoelasticity and outward appearance (opalescence) are determined by process variables such as pH, ionic strength, valency of ions, concentration of constituents, extent of protein denaturation and time of reaction. The actual gelation will take place when the solution of the proteins has cooled down to a value which depends on parameters like pH, ionic strength, protein concentration and the preceding heating trajectory and conditions of heating such as but not limited to pH, ionic strength, protein concentration and heating time. Furthermore, the moment of gelling can be initiated by the addition of mono- or multivalent ions such as sodium, potassium or calcium. Preferably, monovalent ions such as sodium and potassium are used. The gelling can be initiated by adding a salt of such ions.

It has been found that during the process of gelation of hydrocolloids, active proteins (such as enzymes) or carbohydrates can be entrapped in the gel network. Accordingly, in a preferred embodiment, the whey protein is in the form of a gel, and the active compound is entrapped in the gel.

Preferably, the gel formed is transparent, this has been found to give the best release properties. Generally, the transparent gel formed has a jelly-like feel, preferably firm.

In a preferred embodiment, the composition according to the invention is a particle. Accordingly, in a preferred embodiment the invention provides a particle comprising a whey protein and an active compound, wherein the particle releases at most 30 wt% of the active compound when hydrated in Jennes-Koops buffer at room temperature during a period of 30 minutes. Such a particle is hereinafter also referred to as slow release particle.

It will be appreciated by the skilled man that properties and preferred characteristics of a particle as defined herein are determined for a population of particles.

We found preferred sizes for the particles according to the invention. Preferably, the particles have a size between 1 and 250 µm. These particles have the advantage that they are effectively entrapped and homogeneously distributed in the curd during cheese making. The particle size is preferably analysed by means of forward laser light scattering like the Malvern Mastersizer. Preferably, at least 50% (w/w), preferably 70%, and more preferably 90% of the particles of the invention have a size between 1 to 250 µm, preferably from 1 to 100 µm, more preferably from 5 to 50 µm and most preferably from 10 to 30 µm. Particle size is herein defined as the largest diameter/cross-section of a particle.

A food grade formulation of a bio-active hydrocolloid can be made with full retention of the activity of the active compound. During the cheese making process, due to the size of the particles, the active compound will be entrapped substantially in the curd and will not end up in the whey fraction or will only partly end up in the whey fraction.

In a sixth aspect, the invention relates to a composition obtainable by the method according to the invention. The composition obtainable by the method according to the invention differs from the whey particles known from the prior art with respect to their release profile.

The composition obtainable by the process according to the invention preferably releases the active compound at a maximum of 30 wt% of the total amount of active compound (e.g. enzyme), when hydrated in Jennes-Koops buffer at room temperature (20 °C) during a period of 30 minutes.

Preferably the composition according to the invention releases at most 20 wt%, and most preferably at most of 10 wt% of the active compound (e.g. enzyme), when hydrated in Jennes-Koops buffer at room temperature (20 °C) during a period of 30 minutes.

Preferably, the composition according to the invention releases at most 30 wt% of the active compound during a period of 40 minutes, more preferably during a period of 50 minutes, most preferably during a period of 60 minutes, when hydrated in Jennes-Koops buffer at room temperature (20 °C)

More preferably, the composition according to the invention releases at most 20 wt% of the active compound during a period of 40 minutes, more preferably during a period of 50 minutes, most preferably during a period of 60 minutes, when hydrated in Jennes-Koops buffer at room temperature (20 °C)

Even more preferably, the composition according to the invention releases at most 10 wt% of the active compound during a period of 40 minutes, more preferably during a period of 50 minutes, when hydrated in Jennes-Koops buffer at room temperature (20 °C)

Most preferably, the composition according to the invention releases at most 10 wt% of the total amount of active compound (enzyme) entrapped within one hour at 20 °C in Jennes-Koops buffer.

In case a low molecular weight compound containing a free thiol group or a disulfide group or a mixture thereof is also added during the process, even a further improvement of the release characteristics can be achieved, resulting a composition releasing at most 10 wt % of the total amount of active compound (enzyme) within two hours at 20 °C in Jesses-Koops buffer. A composition releasing at most 5 wt% of the total amount of active compound (e.g. enzyme) within one hour at 20 °C in Jennes-Koops buffer have been obtained.

The formation of disulfide bonds between whey protein molecules is thought to play a role in the network formation. The disulfide bond network that is formed is thought to stabilize the protein gel. During the network formation, disulfide bonds that are formed early in the process may at a later stage be re-arranged via disruption of disulfide bonds and formation of new disulfide bonds. This so-called reshuffling of disulfide bonds will occur until an energetic minimum is reached at which there is no longer an energy drive for further reshuffling. Low molecular weight compounds comprising free thiol groups and/or disulfide groups or mixtures of such compounds have been found to facilitate this reshuffling process, thereby accelerating the rate at which thermodynamic equilibrium is reached in the gel. This is not only found for whey proteins, but also for other hydrocolloids comprising a thiol group and/or a disulfide group.

In view of the above, the invention provides, in a seventh aspect, a composition comprising (i) a hydrocolloid comprising a thiol group and/or a disulfide group (ii) an active compound; and (iii) a low molecular weight compound comprising a thiol group and/or a disulfide group.

The invention further provides, in a eighth aspect, a method for preparing a composition comprising (i) a hydrocolloid containing a thiol group and/or a disulfide group and (ii) an active compound, said method comprising gelling of the hydrocolloid in the presence of the active compound and in the presence of a low molecular weight compound comprising a thiol group and/or a disulfide group.

As low molecular weight compound may for instance be used gluthathion, beta-mercapho-ethanol, dithiothreitol, cysteine, cystine, a compound containing cysteine or cystine, such as a peptide containing cysteine or cystine, a protein containing cysteine or cystine, or a protein hydrolysate containing cysteine or cystine.

As used herein, the term low molecular weight compound refers to a compound having a molecular weight of less than 5000 dalton, preferably less than 2000 dalton, more preferably less than 1000 dalton.

Any suitable hydrocolloid containing a thiol group and/or a disulfide group may be used. Examples a hydrocolloid containing a thiol group and/or a disulfide group are casein, whey protein, soybean protein, albumin, or egg protein. Preferably, the hydrocolloid is whey protein.

In a preferred embodiment, the hydrocolloid is in the form of a gel, and the low molecular weight compound is incorporated in the gel.

In a preferred embodiment, the process comprises preparing a solution comprising the hydrocolloid, the active compound and the low molecular weight compound, and gelling of the whey protein from the solution. Preferably, the solution comprises the low molecular weight compound in a concentration of 0.01 - 50 mg/ml, preferably between 0.1 - 20 mg/ml.

In a preferred embodiment, the method comprises adding the low molecular weight compound or mixture thereof prior to any one of the stages a, b, c, d or e as described above, wherein the compound or mixture thereof comprises a free thiol group and/or a disulfide group.

In a ninth aspect, the invention provides a method for the production of cheese, comprising coagulating milk in the presence of the composition according to the invention. Preferably, the method comprises adding the composition to milk, effecting coagulation of the milk in the presence of the composition, resulting in curd and whey, and optionally separating the curd from the whey. The invention further provides a cheese obtainable by the method of the seventh aspect.

In an tenth aspect, the invention provides the use of the composition according to the invention for the preparation of cheese.

It has been surprisingly found that compounds such as enzymes can be entrapped in a whey matrix, which is chosen or produced in such a way that it is homogeneously present in the curd. The compounds will be released into the curd after the separation of the curd from the whey. The higher the amount of enzymes released in the cheese ripening process itself, the higher the efficiency of the enzyme, the lower the amount of enzyme needed.

The composition according to the invention will preferably be in a dry form containing generally from 80 to 99.9 wt% dry matter, preferably from 90 to 99.5 wt% and most preferably from 92 to 98 wt% dry matter. This composition is preferably added to the milk.

In general from 0.01 to 5 wt% of the composition, in particular of particles according to the invention, will be added to milk. Preferably, between 0.1 up to and including 2 wt% is added in normal cheese making. The slow release particle itself will contain from 0.01 to 20 wt% (based on dry matter) of the active compound preferably from 0.05 to 10% and more preferably from 0.1 to 5 wt%.

The swell function of the slow release particles' matrix is used to prevent the initial leakage of the active compounds. These will only dissolve when the particle releases the active compound upon contact with the milk. The dried hydrogel matrix will initially swell and only when enough water is absorbed will the enzymes dissolve and diffuse into the milk. In this way it is possible to entrap the active compound long enough in the matrix, so that the active compound is only substantially available after the separation of the curd from the whey.

The density of the swollen slow release particle is preferably chosen in such a way that the particles are homogeneously distributed throughout the curd and therefore through the cheese milk. Accordingly, the specific gravity of the swollen particle (in wet form) is preferably close to the density of milk. The density of the particle can be adjusted, if necessary, by adding additional compounds. By incorporating for example fats or waxes, into the matrix the density of the matrix can be decreased. These fatty compounds are preferably added to the matrix in dispersed form. To incorporate these fatty compounds in general emulsifiers will used. Preferably, the emulsifier is food grade and more preferably (derived from) a protein present in cheese. For example sodium caseinate or milk fat can be used as emulsifier.

Preferably at least 90%, preferably at least 95%, more preferably at least 99% of the active compound is retained in the curd until after the curd/whey separation step. Retaining or entrapment of the active compound in the curd or cheese can be easily determined by measuring the amount of active compound in the whey according to the procedure as described in Example 2 and making a mass-balance based on the amount of active compound added in total.

Preferably, 90 wt% of the remaining enzyme is released from the composition into the cheese during the cheese making process, more preferably at least 95 wt% and most preferably at least 99 wt% of the remaining enzyme is released into the cheese during the cheese ripening process.

The composition of the present invention can be used in the production of any type of cheese, such as hard or soft cheese such as Cheddar, Gouda, Edam, etc. By use of the composition according to the invention, the cheese ripening process can be substantially accelerated.

In another aspect of the invention the slow release particles can also be used in other processes, for example production of beverages, beer brewing, fermentation, production of washing agents.

Preferred features and characteristics of one aspect of the invention are equally applicable to another aspect *mutates mutandis.*

### Description of the figures

Figure 1 shows the release characteristics of compositions prepared in the presence of various metal ions.
Figure 2 shows the release characteristics of compositions prepared at various values of the pH.
Figure 3 shows the release characteristics of compositions containing various quantities of enzyme.
Figure 4 shows the release characteristics of a composition according to the invention.
Figure 5 shows the release characteristics of compositions according to the invention.

The following examples illustrate the invention, without any limitation thereto.

### EXAMPLES

### Examples 1

### General protocol for the preparation of whey protein gels

Whey protein isolate (WPI; Bipro^{®} from Davisco) solutions were prepared by dissolving WPI in MilliQ-water under stirring for 30 minutes. The WPI solution was than heated for 30 minutes at 80 °C, and subsequently cooled to room temperature. After cooling, the pH was adjusted to the proper value using HCI or NaOH, followed by addition of the enzyme solution under vigorous stirring. Gelling was than induced by the addition of salt. When required, the pH was adjusted again. The solution was left at 4 °C for 20 hours to allow formation of the gel. The gel material was reduced in size by cutting and portions of approximately 25 g were dried either on air at room temperature (which varies between 18 and 23 °C) or in a vacuum oven (50-60 °C, 3-4.5 hours). The dried samples were crushed with mortar and pestle and sieved in a powder fraction (pore size of sieve <250 µm), resulting in a preparation of particles showing slow enzyme release upon dispersion in water.

### Example 2

### General procedure to measure the release of enzyme from whey particles

Jennes-Koops buffer was prepared by dissolving in 850 ml MilliQ-water KH₂PO₄ (1.580 g), tri-potassium-citrate.H₂O (0.508 g), tri-sodiumcitrate.2H₂O (2.120 g), K₂SO₄ (0.180 g), CaCl₂.2H₂O (1.320 g) and KCI (1.078 g). To this solution 50 ml K₂CO₃ solution (0.300 g/50 ml) and finally 50 ml tri-magnesiumcitrate.9H₂O-solution (0.502 g/50ml) were added. The pH was adjusted to pH 6.8 with NaOH and the volume was made up to 11 with MilliQ. The Jennes-Koops buffer was used for the enzyme release experiments, for which 0.50 g of dried whey protein gel containing the enzyme were suspended in 50 ml Jennes-Koops buffer at room temperature. Samples were taken after various time intervals and immediately filtrated over a 0.22 µm filter. Enzyme activity was determined in the filtrates by methods as follows:
Amino peptidase activity was determined at 30 °C in a buffer containing 40 mM phosphate-buffer (pH 7.2) and 0.4 mM L-phenylalanine p-nitroanilide. The change in absorbance was followed at 405 nm and is a measure for the enzyme activity. One unit is defined as the amount of enzyme that releases 1 µmol p-nitroaniline per minute from L-phenylalanine p-nitroanilide at 30°C and pH 7.2.

Chymosin activity was determined using the REMCAT-method. A milk solution was prepared by adding 11 g milk powder (Nilac^{®}, obtained from NIZO, The Netherlands) to 100 ml 4.5 mM CaCl₂ (pH 6.6). The solution was stirred for 30 minutes and kept in the dark for another 30 minutes. Subsequently, 4 ml milk solution were added to a test tube and pre-incubated for 5 minutes at 32 °C. The reaction was started by addition of 80 µl enzyme solution to the mik solution. The start of milk-clotting was determined visually. The quantification of clotting activity was determined using a Maxiren^{®} solution (obtained from DSM, The Netherlands) with known activity as the standard. The activity is expressed in IMCU/ml.

### Example 3

### Effect of whey protein concentration on gel properties

WPI gels were prepared containing 4%, 8%, 10% and 12% whey protein, following the procedure described in example 1. Accellerzyme^{®} APP (an amino peptidase; obtained from DSM, The Netherlands) was dissolved in MilliQ water (6.55 * 10⁵ Units/ml) and desalted via dia-filtration on a 30 kD filter, and was added to the WPI-solution to a final concentration of 3.4 * 10⁴ Units/ml WPI-solution. The pH was 7.0, and gelation was induced by the addition of a 1.0M NaCl solution (5% w/v). The whey protein gels were examined with results described in the table 1.

**Table 1. Characteristics of WPI gels prepared at various protein concentrations.**

| WPI-concentration (%) | Visual characteristics |
|---|---|
| 4 | No gelling; liquid with low viscosity |
| 8 | No gelling; liquid with high viscosity |
| 10 | Transparent, clear gel, firm and jelly-like |
| 12 | Opaque, turbid gel, rigid |

The gel formed with 10% WPI had the most attractive characteristics for handling and was preferred over the 12% gel which was harder to handle. At 4% and 8% WPI-concentration, no gel was formed. The handling characteristics of the gel do not only depend on the whey protein concentration, but also on experimental parameters such as the presence of salts and of pH. Optimal handling characteristics of the final gel are dependent on such parameters as well.

### Example 4

### Effect of pH on gel properties

10% WPI gels were prepared as described in example 3 at pH 5, pH 6, pH 7 and pH 8. The whey protein gels were examined with results described in the table 2.

**Table 2. Characteristics of WPI-gels, prepared at various pH values.**

| pH | Visual characteristics |
|---|---|
| 5 | Very turbid, opague, white gel; very firm hard structure |
| 6 | Turbid, white gel; firm but not jelly-like |
| 7 | Transparent, clear gel, firm and jelly-like |
| 8 | Transparent, rather clear gel; more rigid than at pH7. |

The data show a clear pH-dependence of the gel structure. The pH 7-gel was the best to handle and was therefore most preferred.

### Example 5

### Effect of type of salt and ionic strength on gel properties

10% WPI gels were prepared at pH 7, using the procedure described in example 3. Various ions were used to induce gelation. All salt solutions were added at 5% (w/v). The gels were inspected visually with results described in table 3.

**Table 3. Characteristics of WPI gels, prepared by addition of various salts and at various salt concentrations.**

| Salt | Concentration | Visual characteristics | Mechanical characteristics |
|---|---|---|---|
| CaCl₂ | 0.2M | Slightly turbid, opague gel | Rigid |
| CaCl₂ | 0.4M | Turbid, opague white gel | Very rigid |
| NaCl | 0.2M | Transparent, clear gel | Jelly-like |
| NaCl | 0.5M | Transparent, clear gel | Firm and jelly-like |
| NaCl | 1.0M | Transparent, clear gel | Firm and jelly like |
| NaCl | 2.0M | Transparent, slightly turbid | Rigid |
| NaCl | 3.0M | Opague, turbid gel | Rigid |
| KCI | 1.0M | Transparent, clear gel | Firm and jelly-like |

Clearly, all salt additions lead to gel formation, but the type and quantity of the salt influence gel properties with respect to rigidity and transparency.

### Example 6

### Effect of type of salt and ionic strength on release properties

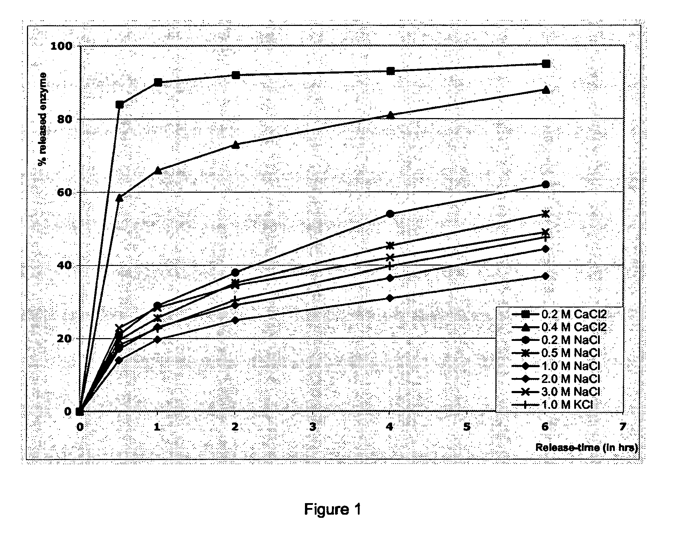

Gels were prepared as given in example 5 with various salts and salt concentrations. Gels were cut and dried on air (48 hours, room temperature) and crushed as described in example 1. The release characteristics are given in figure 1. The 100% activity is calculated based on the known amount of enzyme activity introduced prior to gelation.

The data show a clear dependence of the enzyme release characteristics on the salt that is used and on the concentration of the added salt solution. The addition of the salts having monovalent metal ions (sodium, potassium) are found to result in improved release characteristics (lower release rate). The release characteristics of all particles are surprisingly significantly improved compared to the whey particles described in WO02/23998, example 6, where after 60 minutes more than 50% of activity was released.

### Example 7

### Effect of pH on release characteristics

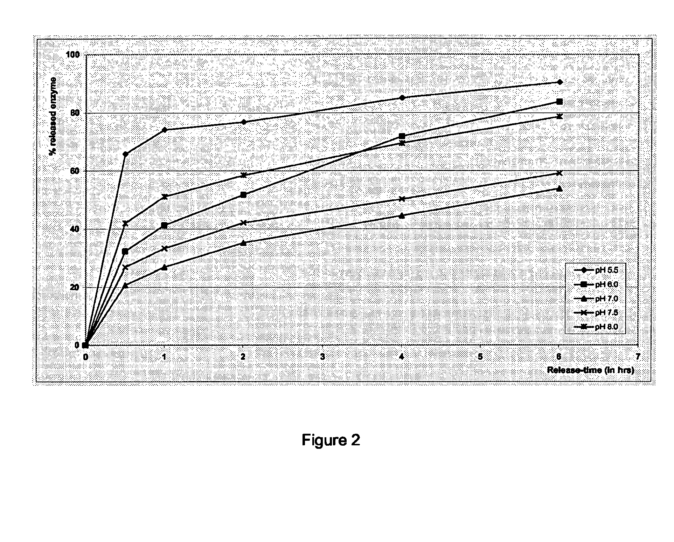

Gels were prepared and dried as described in example 3 at various pH values during gelation, and using a 1.0M NaCl solution to induce gelation. The gel was dried on air (48 hours, room temperature). The release characteristics are described in figure 2. The 100% activity is calculated based on the known amount of enzyme activity introduced prior to gelation. The data show that the release characteristics are a function of pH, and that the most optimal release characteristics are obtained at pH 7.0 (slowest release). However, the other pH values also show good release characteristics compared to those described in the prior art.

### Example 8

### Effect of enzyme dosage on release characteristics

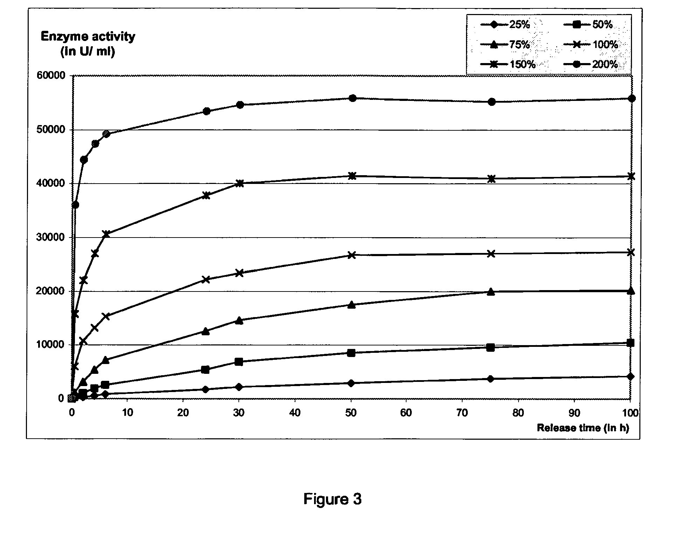

Enzyme release particles were prepared as described in example 3. The pH during gelation was pH 7.0, and gelation was induced by addition of 1.0 M NaCl. The gel was dried on air (48 hours, room temperature). The amount of added Accellerzyme^{®} APP was varied. The release characteristics are given in figure 3. The 100% released enzyme activity plotted on the vertical axis is calculated, based on the known amount of enzyme activity introduced prior to gelation. The enzyme dosages are given as %; 100% is equivalent to 3.4 * 10⁴ U/ml WPI gel.

The release characteristics are a function of the enzyme concentration, lower enzyme concentrations giving slower (better) release characteristics. Apparently the incorporation of enzyme in the whey protein gel proceeds more efficient at lower enzyme concentration, possibly because the introduced enzyme interferes with the network formation of the whey proteins.

### Example 9

### Release characteristics of chymosin from whey particles

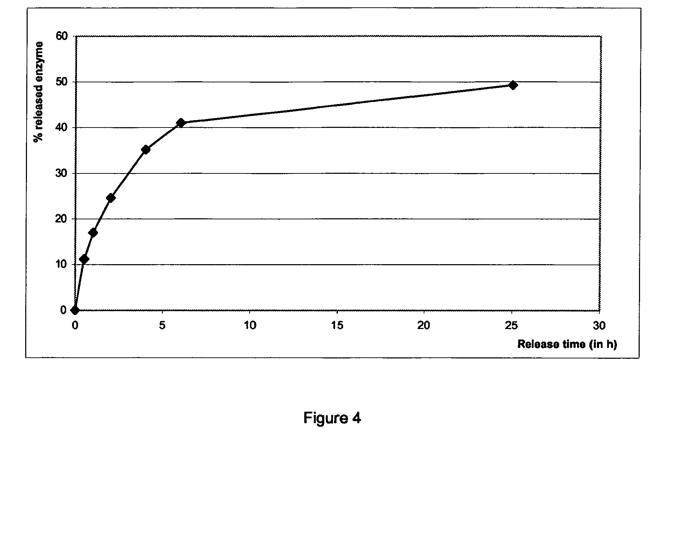

Chymosin was included in the whey protein particles, using the procedure as described in example 1. The pH during gelation was 7.0; the gel formation was induced by addition of 1.0 M NaCl. The gel was dried on air (48 hours, room temperature). Chymosin (Maxiren^{®}, obtained from DSM) was added to a concentration of 30 IMCU/ml WPI solution. The release characteristics are given in figure 4.

The release curve for the endo-protease chymosin is very similar to that, obtained for the aminopeptidase Accellerzyme^{®} APP under the same gel-forming conditions (example7). Apparently the system is suitable to incorporate various enzymes, and the system is not enzyme-specific. Experiments were also performed with phytase (Natuphos^{®} 5000L, BASF) with similar results, confirming the generic character of the manufacturing process described in this example for the whey based slow release particles.

### Example 10

### Release characteristics depending on drying route

Enzyme release particles were prepared as described in example 2. The pH during gelation was 7.0, and gelation was induced by addition of 1.0 M NaCl. The gel particles were dried either on air (48 hours, 23 °C) or in a vacuum oven (20 mBar) at 55 °C (3 hours, option 1)) or in a vacuum oven (20 mBar) at 60 °C (4.5 hours; option 2)

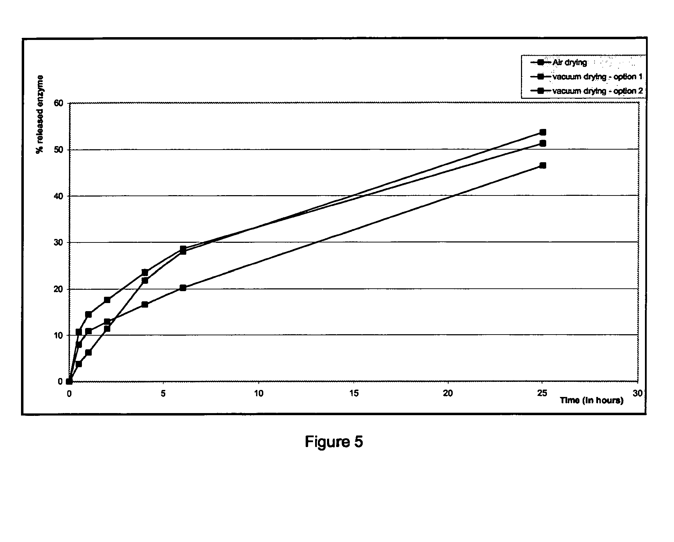

The release characteristics (figure 5) are comparable; the procedure using drying on air slows the best release characteristics in the first three hours. All routes seem, however, suitable for drying.

### Example 11

### Targeting of Accellerzyme^{®} APP to cheese curd

Miniature cheeses were produced as described by Shakeel-Ur-Rehman et al. (Protocol for the manufacture of miniature cheeses in Lait, 78 (1998), 607-620). Raw cows milk was pasteurised by heating for 30 minutes at 63°C. The pasteurised milk was transferred to wide mouth plastic centrifuge bottles (200mL per bottle) and cooled to 31°C.

Subsequently, 0.72 ml of starter culture DS 5LT1 (DSM Gist B.V., Delft, The Netherlands) was added to each of the 200 ml of pasteurised milk in the centrifuge bottles and the milk was ripened for 20 minutes. Then, CaCl₂ (132 µL of a 1 mol.L⁻¹ solution per 200 mL ripened milk) was added, followed by the addition of whey based targeting material containing the amino-peptidase Accellerzyme^{®} APP, prepared as described in example 8 (using 3.4 * 10⁴ U/ml gel solution) to 65 U/ml cheese milk. In the control cheeses, either no enzyme was added or the same amount of enzyme activity (65 U/ml) was added without prior incorporation into a whey matrix. The coagulant (0.04 IMCU per ml) was added directly after the amino-peptidase. The milk solutions were held for 40-50 minutes at 31 °C until a coagulum was formed. The coagulum was cut manually by cutters of stretched wire, spaced 1 cm apart on a frame. Healing was allowed for 2 minutes followed by gently stirring for 10 minutes. After that, the temperature was increased gradually to 39°C over 30 minutes under continuous stirring of the curd / whey mixture. Upon reaching a pH of 6.2 the curd / whey mixtures were centrifuged at room temperature for 60 minutes at 1,700 g. The whey was drained and the curds were held in a water bath at 36°C. The cheeses were inverted every 15 minutes until the pH had decreased to 5.2-5.3 and were then centrifuged at room temperature at 1,700g for 20 minutes. After manufacture the cheese were ripened at 12 °C and sensory analysis was performed after 3 and 6 weeks of ripening by a panel of at least 3 people.

The amino-peptidase activity was determined in the whey fraction (after the first centrifugation). The amino-peptidase activity in the control cheese was 8 times higher than in the cheese prepared with the amino-peptidase incorporated in the whey particles. Apparently, the whey particles are able to reduce enzyme loss to the whey with almost 90%. The cheeses were tasted after 6 weeks by a descriptive taste panel. The two control cheeses were similar and both bland in taste and smell; the cheese prepared with the aminopeptidase incorporated into the whey particles had a stronger cheesy smell and a fuller, more mature taste. The difference in taste suggests that the amino-peptidase is not only targeted to the cheese, but is also released and active.

### Example 12

A reference whey protein gel was as described in example 3, using a 10% whey protein concentration and Accellerzyme APP as the ingredient. However, instead of forming a gel as described in example 3, directly after addition of the salt the gel was spray-dried using a NIRO 2.5 spray dryer, equipped with a rotary atomizer. The inlet temperature was set at 180°C and the outlet temperature at 80°C. The spray-dried powder was subjected to the enzyme release test, as described in example 2. In a parallel experiment, cystine was added together with the enzyme to a final concentration of 5 mM. In yet another parallel experiment a hydrolysate of whey protein isolate was added together with the enzyme to a final concentration of 5.5 mg/ml. The WPI-hydrolysate was obtained by treatment of a 10% WPI-solution with the protease Alcalase (Novozymes, Denmark; 5% of total whey protein) at 60°C, pH6.5 until a degree of hydrolysis of 20-25% was obtained. The initial pH was 6.5 and was not adjusted during the experiment. The protease was inactivated by heat treatment (85 °C, 10 minutes). Free amino groups were quantified using the OPA-reagent and were used to calculate the degree of hydrolysis. The results of the release test are given below:

**Table 4: Percentage of enzyme released from particles, obtained via spray drying.**

| Time in the release test (minutes) | Reference | Addition of cystine | Addition of hydrolysate |
|---|---|---|---|
| 10 | 100 | 58 | 20 |
| 30 | 100 | 82 | 29 |
| 60 | 100 | 90 | 37 |

These examples show that the addition of cystine (a disulfide) resulted in a clear improvement of the release characteristics, and addition of a whey protein hydrolysate (containing disulfides and free thiol groups) resulted in even further improvement. Clearly, the presence of low molecular weight thiol and/or disulfide groups is beneficial, in particular when forming particles via the spray drying route.

## Claims

1. A method for preparing a composition comprising an active compound and whey protein, said method comprising gelling of the whey protein in the presence of an active compound under conditions such as to obtain a composition which releases at most 30 wt% of the active compound when hydrated in Jennes-Koops buffer at room temperature during a period of 30 minutes, wherein the method is a method according to any one of claims 25 to 34.

2. A method according to claim 1, wherein the active compound is an enzyme.

3. A method according to claim 2, wherein the enzyme is a protease, an aminopeptidase, a carboxypeptidase, an amino transferases, a lyase, a beta-galactosidase, a lipase, or a combination thereof.

4. A method for preparing a composition comprising an active compound and whey protein, according to any preceding claim, said method comprising gelling of the whey protein in the presence of an active compound at a pH between 5 and 8.

5. A method for preparing a composition comprising an active compound and whey protein, according to any preceding claim, said method comprising gelling of the whey protein in the presence of an active compound and in the presence of monovalent metal ions.

6. A method according to claim 5, wherein the monovalent metal ions are sodium or potassium ions.

7. A method according to any preceding claim, wherein the method comprises preparing a solution comprising the whey protein and the active compound; and gelling of the whey protein from said solution.

8. A method according to claim 7, wherein the solution comprises between 8 to 12 wt.% of whey protein.

9. A method according to claim 7 or 8, wherein the solution comprises monovalent, metal ions in a concentration between 10 and 250 mM.

10. A method according to any preceding claim, comprising dissolving whey protein, treating the dissolved whey protein such as to effect denaturation of the whey protein, and adding the active compound to the treated whey protein to obtain a solution comprising the whey protein and the active compound.

11. A method according to claim 10, wherein said treating is by heating, preferably at a temperature of at least 80°C.

12. A method, according to any preceding claim, wherein said gelling comprises subjecting the whey protein to a temperature between 0 and 20 °C, preferably between 2 and 10°C.

13. A method according to claim 12, wherein said subjecting is for a period of at least 2 hours, preferably between 2 and 40 hours, more preferably between 4 and 20 hours.

14. A method for preparing a composition comprising an active compound and whey protein, according to any preceding claim, the method comprising (a) dissolving whey protein at neutral pH, (b) heating the whey protein to at least 80 °C, (c) cooling the whey protein, (d) adding the active compound in an amount from 0.01 to 20 wt% (based on dry matter of the whey protein) at a temperature which does not inactivate the active compound; and (e) initiate gelation of the whey protein.

15. A method according to claim 7 and any preceding claim, wherein the method comprises spray drying the solution.

16. A method according to any preceding claim, wherein the composition is a particle.

17. A composition obtainable by the method according to any preceding claim.

18. A composition comprising:
(i) a hydrocolloid comprising a thiol group and/or a disulfide group
(ii) an active compound; and
(iii)a low molecular weight compound comprising a thiol group and/or a disulfide group.

19. A composition according to claim 18, wherein the low molecular weight compound is selected from gluthathion, beta-mercapho-ethanol, dithiothreitol, cysteine, cystine, a compound containing cysteine or cystine, such as a peptide containing cysteine or cystine, a protein containing cysteine or cystine, or a protein hydrolysate containing cysteine or cystine.

20. A composition according to claim 18 or claim 19, wherein the hydrocolloid is selected from casein, whey protein, soybean protein, albumin, egg protein.

21. A composition according to claim 20, wherein the hydrocolloid is whey protein.

22. A composition according to any one of claims 18 to 21, wherein the low molecular weight compound is a compound having a molecular weight of less than 5000 dalton, preferably less than 2000 dalton, more preferably less than 1000 dalton.

23. A composition according to any preceding claim, wherein the active compound is an enzyme, preferably as defined in claim 3.

24. A composition according to any one of claims 18 to 23, wherein said composition is a particle.

25. A method for preparing a composition comprising (i) a hydrocolloid containing a thiol group and/or a disulfide group and (ii) an active compound, said method comprising gelling of the hydrocolloid in the presence of the active compound and in the presence of a low molecular weight compound comprising a thiol group and/or a disulfide group.

26. A method according to claim 25, wherein the low molecular weight compound is selected from containing gluthathion, beta-mercapho-ethanol, dithiothreitol, cysteine, cystine, or a compound containing cysteine or cystine, such as a peptide containing cysteine or cystine, a protein containing cysteine or cystine, or a protein hydrolysate containing cysteine or cystine.

27. A method according to any preceding claim, wherein the method comprises preparing a solution comprising the hydrocolloid, the active compound and the low molecular weight compound; and
gelling of the whey protein from the solution.

28. A method according to claim 27, wherein the concentration low molecular weight compound in the solution is 0.01 - 50 mg/ml, preferably between 0.1 - 20 mg/ml.

29. A method according to claim 27 or claim 28, wherein the method comprises spray drying the solution.

30. A method according to any one of claims 25 to 29, wherein the hydrocolloid is selected from casein, whey protein, soybean protein, albumin, egg protein.

31. A method according to claim 30, wherein the hydrocolloid is whey protein.

32. A method according to any one of claims 25 to 31, wherein the low molecular weight compound is a compound having a molecular weight of less than 5000 dalton, preferably less than 2000 dalton, more preferably less than 1000 dalton.

33. A method for the production of cheese, comprising coagulating milk in the presence of the composition according to any one of claims 18 to 24.

34. A method according to claim 33, comprising adding the composition to milk, effecting coagulation of the milk in the presence of the composition, resulting in curd and whey, and optionally separating the curd from the whey.

35. Use of the composition according to any one of claims 18 to 24 in the preparation of cheese.

36. A cheese obtainable by the method according to claim 33 or 34.
